# EUROPEAN PATENT SPECIFICATION

(11) **EP 2 860 790 B1**
(45) Date of publication and mention of the grant of the patent: **27.09.2017**
(21) Application number: 14183036.4
(22) Date of filing: 01.09.2014
(51) Int. Cl.: H01M 2/16, H01M 10/052, H01M 10/0565

(54) **Lithium polymeric membrane based on a semi-crystalline fluorinated polymeric matrix and a non-ionic surfactant**
Lithium-Polymermembran basierend auf einer halbkristallinen fluorierten Polymermatrix und einem nichtionischen Tensid
Membrane polymère au lithium basée sur une matrice de polymère fluoré semi-cristallin et tensioactif non ionique

(30) Priority: 11.10.2013 ES 201331499
(43) Date of publication of application: 15.04.2015
(73) Proprietor: Instituto Tecnologico de la Energia ITE, 46980 Paterna Valencia (ES)
(72) Inventor: Zubizarreta Saenz de Zaitegui, Leire, 46980 Paterna (Valencia) (ES); Gil Agustí, Maria Teresa, 46980 Paterna (Valencia) (ES); Quijano López, Alfredo, 46980 Paterna (Valencia) (ES); Garcia Pellicer, Marta, 46980 Paterna (Valencia) (ES)
(74) Representative: Ungria López, Javier

(56) References cited:
- US-A1- 2009 162 754
- US-A1- 2010 273 048
- K. M. ABRAHAM ET AL: "Highly Conductive PEO-like Polymer Electrolytes", CHEMISTRY OF MATERIALS, vol. 9, no. 9, 1 September 1997 (1997-09-01), pages 1978-1988, XP055160102, ISSN: 0897-4756, DOI: 10.1021/cm970075a
- K. M. ABRAHAM: "PEO-Like Polymer Electrolytes with High Room Temperature Conductivity", JOURNAL OF THE ELECTROCHEMICAL SOCIETY, vol. 144, no. 6, 1 January 1997 (1997-01-01), page 136, XP055160105, ISSN: 0013-4651, DOI: 10.1149/1.1837701

## Description

### TECHNICAL FIELD

The present invention falls within the field of devices for converting electric energy into chemical energy, or vice versa. In particular, it refers to a polymeric membrane to be used as an electrolyte and/or separator in lithium polymeric batteries.

### PRIOR ART

Lithium batteries are interesting candidates due to their high density of energy and power in comparison with other storage devices (Lithium Battery Energy Storage (LIBES) Publication, Technological Research Association, Tokyo 1994). The basic components of this type of batteries are the cathode, anode and electrolyte, the latter of which may be liquid or solid. The lithium batteries that are currently available on the market use liquid electrolytes which consist of lithium salts dissolved in highly flammable solvents. There are a number of problems in the battery associated with the use of this type of electrolyte, such as dripping problems and danger of explosion (W.A. van Schalkwijk, B. Scrosati, Advanced in Lithium-Ion Batteries, Kluwer Academic/Plenum Publisher, 2002; G.-A.Nazri, G. Pistoia, Lithium Batteries, Kluwer Academic/Plenum Publisher, 2004). On the other hand, liquid electrolytes are made up of lithium salts dissolved in carbonate-based solvents. These carbonates have a number of advantages, such as high solubility of lithium salts therein, which enables high ionic conductivity. Nevertheless, they also involve a number of problems, such as high volatility and high reactivity thereof with electrodes (Megahed, S.; Scrosati, B. Rechargeable Nonaqueous Batteries, Interface, 1995, 4 (4), 34-37; Brummer, S.B.; Koch, V.R. Materials for Advanced Batteries. D.W. Murphy, J. Broadhead, B.C.H. Steels; Plenum: New York, 1980).

In the case of polymeric membranes, where the carbonates are used as a plasticizer, in addition to the aforementioned drawbacks, such membranes have poor mechanical properties at high degrees of plasticization (Diganta Saikia, Hao-Yiang Wu, Yu-Chi Pan, Chi-Pin Lin, Kai-Pin Huang, Kan-Nan Chen, George T.K. Fey, Hsien-Ming Kao, Highly conductive and electrochemically stable plasticized blend polymer electrolytes based on PVdF-HFP and triblock copolymer PPG-PEG-PPG diamine for Li-ion batteries, Journal of Power Sources, Volume 77, Issue 2, February 1999, Pages 183-197). For this reason, the search for alternative electrolytes is one of the most important challenges in the development of lithium batteries, preferably with solid or polymeric electrolytes.

The advantages of solid or polymeric electrolytes with respect to liquid ones are their excellent processing and flexibility; increased safety of the final battery due to greater retention of the flammable organic solvents used; prevention of the possible growth of lithium dendrites with the cycles; and the high dimensional stability thereof (Di Noto V., Lavina S., Giffin G.A., Negro E., Polymer Electrolyte: Present, Past and future. Electrochimica Acta, 57, 4-13, 2011; Song J.Y., Wang Y.Y. Wan C.C. Review of gel-type polymer electrolytes for lithium-ion batteries, 77 (1999) 183-197; Tarascon J.M., Armand M., Issues and challenges facing rechargeable lithium batteries, Nature, 414 (2001)). These properties involve greater safety of the final battery as well as fewer undesired secondary reactions in the battery.

At present, commercial systems use electrolytes based on organic carbonates such as, for example, ethylene carbonate (EC), diethyl carbonate (DEC) or ethylmethyl carbonate (EMC). The reason why this type of plasticizers is used is that they dissolve lithium salts in a sufficient concentration due to the high dielectric constant thereof, and they are electrochemically stable up to approximately 4 V. However, these carbonates are flammable and volatile, which still causes serious safety problems in batteries and reduces the range of operability thereof.

The use of ionic liquids is currently being studied as an alternative to carbonates, which are also organic solvents that are hardly flammable, have very low vapor pressure and are chemically and thermally stable. However, the production processes are very sophisticated and the cost of this type of solvents is very high. The prior art has also described the use of non-ionic surfactants such as polyethylene glycol (PEG) with polymeric matrices such as polyethylene oxide (PEO) (Nirali Gondaliya, Dinesh K. Kanchan, Poonam Sharma, Effect of a plasticizer on a solid polymer electrolyte. Society of Plastics Engineers; Plastics Research Online, 2013). However, the use of these components does not cause an increase in the conductivity of the polymeric membrane with respect to not adding the aforementioned surfactant.

There have also been some studies using PEG as a plasticizer in a fluorinated matrix such as PVdF-HFP, but for the purpose of forming polymeric gels and not polymeric membranes (Lee C., Km J., Bae J., Polymer 44 (2003) 7143-7155). The difference between them lies on the fact that in polymeric gels a liquid electrolyte (lithium salt dissolved in carbonates) is added in the final step over the polymeric matrix and a gel is formed. In a solid polymeric membrane, liquid electrolytes are not used, and therefore a solid polymeric film is obtained.

Consequently, substituting the liquid carbonates used as a solvent in liquid batteries and as a plasticizer in polymeric batteries is a problem to be solved, since it is necessary to use plasticizers that are less volatile, less flammable, environmentally friendly, and low cost. Likewise, there is a need to find plasticizers that are thermally and electrochemically stable in the range of operation of the battery, capable of efficiently dissolving lithium salts, and providing the polymeric membrane with good mechanical properties.

### DESCRIPTION

### Brief description of the invention

In a first aspect, the present invention provides a lithium polymeric membrane characterized in that it comprises a fluorinated and semi-crystalline polymeric matrix, a lithium salt and a non-ionic surfactant as a plasticizer.

The polymeric membranes described in this patent application have better thermal, electrochemical and mechanical properties, i.e. the membranes are thermally stable up to a higher temperature and up to a higher voltage and, moreover, they are not subject to breakage, as the ionic conductivity thereof is similar to that obtained by using organic carbonates as plasticizers. Furthermore, the use of non-ionic surfactants as plasticizers in the present invention makes it possible to include higher proportions of lithium salt in the composition of the polymeric membranes, such that it is possible to attain up to 30 % by weight of lithium salt with respect to the total weight of the membrane, resulting in higher ionic conductivity values, and giving the membrane mechanical properties that are suitable for use in batteries. Polymeric K.M. Abraham et al ("Highly conductive PEO-like Polymer Electrolytes", Chemistry of Material, vol. 9, no. 9, pages 1978-1988; and "PEO-Like Polymer Electrolytes with High Room Temperature Conductivity", Journal of the Elecrochemical Society, vol. 144, no. 6 (page 136-138) describe high conductive polymeric electrolyte membranes comprising poli(vinyliden fluoride-co-hexafluoropropylene (PVdF-HFP), a lithium salt such as LiSO₃CF₃ or LiN(SO₂CF₃)₂ (imide), and oligomeric poly(ethylene glycol) dimethyl ether (PEGDME) as a plasticizer. This prior art documents further describe the use of such electrolytes in lithium batteries.

Masaki Machida et al. (US 2010/0273048 A1, published on October 2010) refer to a polymeric gel including a non-aqueous solvent (carbonates among others), an electrolyte salt, a matrix resin, a filler and a surfactant. This prior art document discloses different lists of any of the above-mentioned ingredients, among which poly(vinilidene fluoride-co-hexafluropropylene), lithium hexafluorophosphate and polyethylene glycol tert-octylphenyl ether are mentioned. However, the specific combination of these specific compounds is not disclosed in US 2010/0273048 A1.

F. Cotton et al. (US 2009/0162754 A1, published on June 2009) disclose a solid polymeric membrane comprising a first polymer capable of solvating a lithium salt (such as polyether polymer), the lithium salt and a second polymer at least partially miscible with the first polymer. membranes with 30 % of lithium salt and organic carbonates in the same proportion as those used for the membranes with non-ionic surfactants of the present invention are heterogeneous and have poorer mechanical properties, with breakage of up to 30 % deformation, which is unsuitable for use in lithium batteries.

The present invention refers to lithium polymeric membranes, suitable for the use thereof in batteries, which comprise a non-ionic surfactant as a plasticizer. The membrane described in the present patent application has thermal stability (up to 200°C) and electrochemical stability (more than 4 V vs Li/Li⁺), and shows no breakage in the deformation range applied (up to 100 %) in comparison with membranes that comprise conventional organic carbonates such as ethylene carbonate (EC) or diethyl carbonate (DEC), in addition to having ionic conductivity values at 25°C that are similar to such membranes. The polymeric membranes of the present invention are therefore suitable for use in the range of operation in terms of temperature and voltage.

The polymeric membrane proposed by the inventors can act as both an electrolyte, enabling lithium ions to pass through the electrodes, and as an electric insulator. Moreover, the polymeric membranes described in this patent application make the battery safer, as the composition thereof does not include any flammable substances, in comparison with the liquid carbonates used at present, which are highly flammable.

In a second aspect, the present invention refers to a method for obtaining the polymeric membrane as described in the present patent application, preferably when it comprises PVdF-HFP, lithium hexafluorophosphate and polyethylene glycol tert-octylphenyl ether, characterized in that the method comprises:
a) obtaining a polymeric solution comprising the fluorinated and semi-crystalline polymeric matrix, the lithium salt, the non-ionic surfactant and at least one solvent;
b) depositing the solution obtained in step a) on a support; and
c) eliminating the solvent.

In a third aspect, the present invention also refers to the use of the polymeric membrane as described in this patent application, as electrolyte and/or electrical insulator in lithium polymeric batteries.The present invention refers to the use of the polymeric membrane that comprises PVdF-HFP, lithium hexafluorophosphate and polyethylene glycol tert-octylphenyl ether, as electrolyte and/or electrical insulator in lithium polymeric batteries.

### Detailed description of the invention

In a first aspect, the present invention provides a lithium polymeric membrane characterized in that it comprises a fluorinated and semi-crystalline polymeric matrix, a lithium salt and polyethylene glycol tert-octyphenyl ether, distributed on the market as Triton®, as plasticizer. The non-ionic surfactant comprised in the lithium polymeric membrane that is described in this patent application, polyethylene glycol tert-octylphenyl ether, causes an increase in the conductivity of the polymeric membrane.

Fluorinated polymeric matrices offer advantages such as high chemical and electrochemical stability. In addition, the fact that the matrix is semi-crystalline means that the membrane produced has an amorphous portion and a crystalline portion. The amorphous portion of the membrane makes it possible for lithium ion conduction to take place, whereas the crystalline portion provides the membrane of the invention with good mechanical properties. The fluorinated and semi-crystalline polymeric matrix is poly(vinyliden fluoride-co-hexafluoropropylene) (PVdF-HFP). Preferably, with a melting point of between 110 and 160°C, and most preferably 140 °C. This polymeric matrix is stable in the typical potential window of lithium batteries, i.e. between 2-4 V. The lithium polymeric membrane as described in this patent application comprises a lithium salt soluble in organic solvents, and it is chemically and electrochemically stable. The lithium salt is lithium hexafluorophosphate.

In another preferred embodiment, the lithium polymeric membrane as described in the present patent application, comprises PVdF-HFP, lithium hexafluorophosphate and polyethylene glycol tert-octylphenyl ether, and preferably has a conductivity of between 2.4 10⁻⁸ and 1.20⁻⁵ S cm⁻¹ at 25 °C; and between 1.6 10⁻⁵ and 3.4 10⁻⁴ in the temperature range of 40-100 °C.

In another preferred embodiment, the lithium polymeric membrane of the present invention comprises between 35 and 55 % of PVdF-HFP, between 15 and 30 % of lithium hexafluorophosphate and between 30 and 50 % of polyethylene glycol tert-octylphenyl ether.

As shown in the section of examples, the polymeric membrane of the present invention makes it possible to obtain a conductivity value that is similar to that of other carbonate membranes produced by the same method, with the same proportion of reagents, where the lithium salt and the polymeric matrix are identical, and the use of a carbonate, which in the examples is EC (ethylene carbonate) or DEC (diethyl carbonate), as a plasticizer being the only difference between the two of them.

Thus, the present invention provides a lithium polymeric membrane that improves upon those that are known which comprise carbonate, since the conductivities thereof has the same order of magnitude as the latter, and the rest of the components and the production method are the same, but with the added advantage that the membrane of the invention is more thermally and electrochemically stable, and uses non-flammable plasticizers. Furthermore, as mentioned above, the present invention provides a polymeric membrane with up to 30 % by weight of lithium salt with respect to the total weight of the membrane, having mechanical characteristics that are suitable for use thereof in lithium batteries. Preferably, when the lithium salt is lithium hexafluorophosphate.

In a second aspect, the present invention refers to a method for obtaining the polymeric membrane as described in the present patent application, preferably when it comprises PVdF-HFP, lithium hexafluorophosphate and polyethylene glycol tert-octylphenyl ether, characterized in that the method comprises:
a) obtaining a polymeric solution comprising the fluorinated semi-crystalline polymeric matrix, the lithium salt, the non-ionic surfactant and at least one solvent;
b) depositing the solution obtained in step a) on a support; and
c) eliminating the solvent.

In a preferred embodiment, step a) comprises dissolving the mixture of semi-crystalline fluorinated polymeric matrix, lithium salt and non-ionic surfactant in an organic solvent or mixture of solvents, such as, for example, tetrahydrofuran, acetonitrile, acetone or a mixture thereof. Preferably, in order for this dissolution to take place, the mixture is heated at a temperature of between 50-70 °C.

In an even more preferred embodiment, the solvent used in step a) is tetrahydrofuran and dissolution takes place by heating at a temperature of 60 °C.

In another preferred embodiment, step b) comprises depositing the polymeric solution obtained in step a) on a flat support, preferably on a flat substrate. This depositing is preferably carried out by means of casting.

In another preferred embodiment, step c) comprises evaporating the solvent, preferably at a maximum temperature of 30 °C, with a stream of inert gas such as nitrogen or argon.

In a third aspect, the present invention also refers to the use of the polymeric membrane that is described in this patent application, as an electrolyte and/or electrical insulator in lithium polymeric batteries. The present invention refers to the use of the polymeric membrane that comprises PVdF-HFP, lithium hexafluorophosphate and polyethylene glycol tert-octylphenyl ether, as an electrolyte and/or electrical insulator in lithium polymeric batteries.

### BRIEF DESCRIPTION OF THE FIGURES

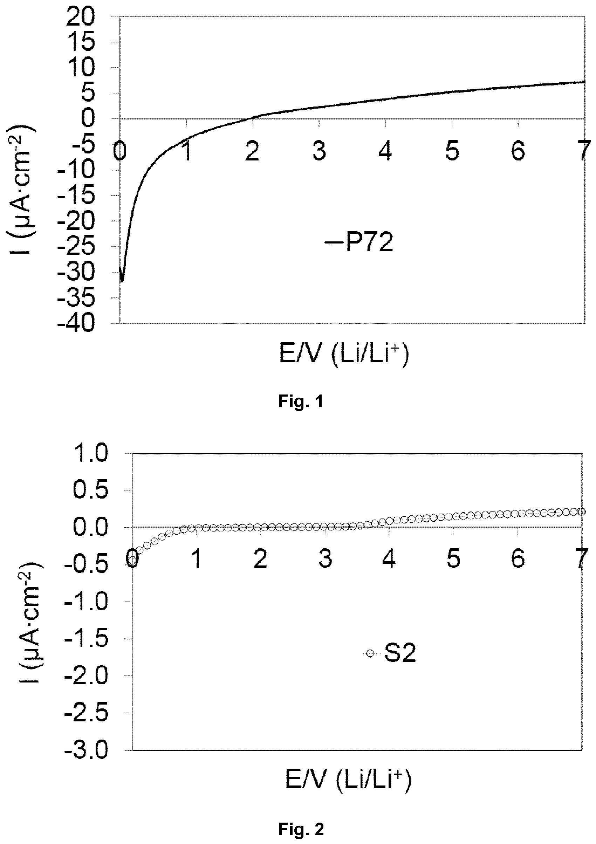

**Figure 1****.** Linear sweep voltammetry for P72 (liquid carbonates).
**Figure 2****.** Linear sweep voltammetry for S2 (non-ionic surfactant).

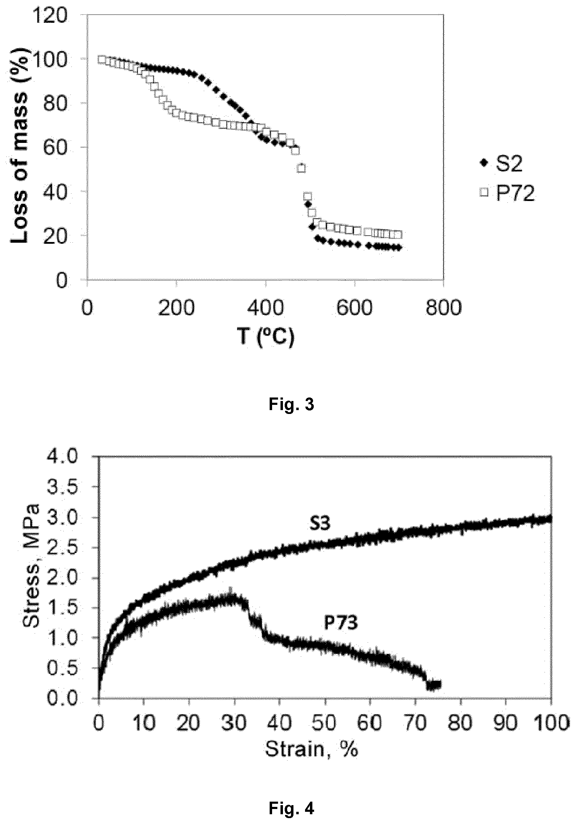

**Figure 3****.** Thermogram of membranes S2 and P72.
**Figure 4****.** Stress-strain curves of membranes S3 y P73.

### EXAMPLES

### Example 1: Polymeric membrane comprising a non-ionic surfactant (S2

### and S3 sample)

First of all, a polymeric suspension containing PVdF-HFP, lithium hexafluorophosphate and polyethylene glycol tert-octylphenyl ether was prepared under an inert atmosphere. The mixture of the three components was dissolved in tetrahydrofuran at 60 °C for 1 hour. After obtaining the polymeric solution, the casting process that consists of depositing a film of polymer with the desired thickness upon a flat substrate was carried out. Once depositing was done, the solvent was allowed to evaporate at 22-25 °C under a stream of nitrogen, until the residual solvent content was less than 1 %.

The studied proportions of the components of the membrane were 35-55 % of PVdF-HFP, 15-30 % of lithium hexafluorophosphate and 30-50 % of polyethylene glycol tert-octylphenyl ether.

### Example 2: Polymeric membrane comprising a carbonate-based surfactant (P72 and P73 sample)

The polymeric membrane containing liquid carbonate was synthesized using exactly the same method as the one described in example 1, except that a 1/1 mixture by volume of EC/DEC was used as a plasticizer, which resulted in the conductivity values in table 2.

**Table 1. Composition of the polymeric membranes developed using a non-ionic surfactant (S2 and S3) and polymeric membranes with liquid carbonates (P72 and P73) used for the measurement of ionic conductivity in table 2**

| **Sample** | **Plasticizer** | **%Polymer (PVdF-HFP)** | **%Salt (LiPF6**) | **%Plasticizer** |
|---|---|---|---|---|
| S2 | Non-ionic surfactant (polyethylene glycol tert-octylphenyl ether) | 55 | 15 | 30 |
| P72 | Liquid carbonates | 55 | 15 | 30 |
| S3 | Non-ionic surfactant (polyethylene glycol tert-octylphenyl ether) | 40 | 30 | 30 |
| P73 | Liquid carbonates | 40 | 30 | 30 |

**Table 2. Ionic conductivity at room temperature of S2, P72, S3 and P73**

| **MEMBRANE** | **CONDUCTIVITY T=25 °C (S cm-1)** |
|---|---|
| S2 (non-ionic surfactant) | 2.8 10⁻⁷ |
| P72 (liquid carbonates) | 9.5 10⁻⁷ |
| S3 (non-ionic surfactant) | 4.6 10⁻⁶ |
| P73 (liquid carbonates) | 1.0 10⁻⁵ |

**Table 3. Cost of liquid carbonates as opposed to the non-ionic surfactant used**

| **PLASTICIZER** | **COST** |
|---|---|
| polyethylene glycol tert-octylphenyl ether | €67/kg |
| EC | €140/L |
| DEC | €371/L |

## Claims

1. A lithium polymeric membrane comprising a fluorinated and semi-crystalline polymeric matrix, a lithium salt and a non-ionic surfactant as a plasticizer, wherein the fluorinated and semi-crystalline polymeric matrix is poly(vinyliden fluoride-co-hexafluoropropylene), the lithium salt is lithium hexafluorophosphate, and **characterised in that** the non-ionic surfactant is polyethylene glycol tert-octylphenyl ether.

2. The lithium polymeric membrane according to claim 1, comprising between 35 and 55 % of poly(vinylidene fluoride-co-hexafluoropropylene), between 15 and 30 % of lithium hexafluorophosphate and between 30 and 50 % of polyethylene glycol tert-octylphenyl ether, wherein all these amounts are expressed by weight with respect to the total weight of the membrane.

3. A method for obtaining the lithium polymeric membrane as described in any one of the claims 1 to 2, **characterized in that** it comprises:
a) obtaining a polymeric solution comprising poly(vinylidene fluoride-co-hexafluoropropylene), lithium hexafluorophosphate, polyethylene glycol tert-octylphenyl ether and at least one solvent;
b) depositing the solution obtained in step a) on a support; and
c) eliminating the solvent.

4. Use of the lithium polymeric membrane as described in any one of the claims 1 to 2, as an electrolyte and/or electrical insulator in lithium polymeric batteries.

## Patentansprüche

1. Lithium-Polymermembran umfassend eine fluorierte und halbkristalline Polymermatrix, ein Lithiumsalz und ein nichtionisches Tensid als einen Weichmacher, wobei die fluorierte und halbkristalline Polymermatrix Poly(vinylidenfluorid-co-hexafluorpropylen) ist, das Lithiumsalz Lithiumhexafluorphosphat ist, und **dadurch gekennzeichnet, dass** das nichtionische Tensid Polyethylenglycol-tert-octylphenylether ist.

2. Lithium-Polymermembran gemäß Anspruch 1, umfassend zwischen 35 und 55% Poly(vinylidenfluorid-co-hexafluorpropylen), zwischen 15 und 30% Lithiumhexafluorphosphat und zwischen 30 und 50 % Polyethylenglycol-tert-octylphenylether, wobei alle diese Mengen als Gewichtsprozent, bezogen auf das Gesamtgewicht der Membran, angegeben sind.

3. Verfahren zum Erhalten der Lithium-Polymermembran, wie sie in einem der Ansprüche 1 bis 2 beschrieben ist, **dadurch gekennzeichnet, dass** es umfasst:
a) das Erhalten einer Polymerlösung umfassend Poly(vinylidenfluorid-co-hexafluorpropylen), Lithiumhexafluorphosphat, Polyethylenglycol-tert-octylphenylether und wenigstens ein Lösungsmittel;
b) das Abscheiden der in Schritt a) erhaltenen Lösung auf einem Träger; und
c) das Entfernen des Lösungsmittels.

4. Verwendung der Lithium-Polymermembran, wie sie in einem der Ansprüche 1 bis 2 beschrieben ist, als ein Elektrolyt und/oder elektrischer Isolator in Lithium-Polymerbatterien.

## Revendications

1. Membrane polymère au lithium comprenant une matrice polymère fluorée et semi-cristalline, un sel de lithium et un tensioactif non ionique comme un plastifiant, dans laquelle la matrice polymère fluorée et semi-cristalline est du poly(fluorure de vinylidène-co-hexafluoropropylène), le sel de lithium est l'hexafluorophosphate de lithium, et **caractérisée en ce que** le tensioactif non-ionique est le tert-octylphényléther de polyéthylèneglycol.

2. Membrane polymère au lithium selon la revendication 1, comprenant de 35 à 55 % de poly(fluorure de vinylidène-co-hexafluoropropylène), de 15 à 30 % d'hexafluorophosphate de lithium et de 30 à 50 % de tert-octylphényléther de polyéthylèneglycol, dans laquelle toutes ces quantités sont exprimées en masse par rapport à la masse totale de la membrane.

3. Procédé d'obtention de la membrane polymère au lithium selon l'une quelconque des revendications 1 à 2, **caractérisé en ce qu'**il comprend :
a) l'obtention d'une solution polymère comprenant du poly(fluorure de vinylidène-co-hexafluoropropylène), de l'hexafluorophosphate de lithium, du tert-octylphényléther de polyéthylèneglycol et au moins un solvant ;
b) le dépôt de la solution obtenue dans l'étape a) sur un support ; et
c) l'élimination du solvant.

4. Utilisation de la membrane polymère au lithium selon l'une quelconque des revendications 1 à 2, comme un électrolyte et/ou un isolant électrique dans des accumulateurs polymères au lithium.
